# EUROPEAN PATENT APPLICATION

(11) **EP 4 718 229 A1**
(43) Date of publication of application: **01.04.2026**
(21) Application number: 25201331.3
(22) Date of filing: 10.09.2025
(51) Int. Cl.: G06F 3/04847, G06F 3/0488, G06F 3/04886

(54) **INTERACTIVE HUMAN MACHINE INTERFACE BUTTONS AND SLIDER**

(30) Priority: 25.09.2024 US 202463698587 P; 16.12.2024 US 202418981796
(71) Applicant: Computime Ltd., Shatin New Territories (HK)
(72) Inventor: Cheung, Kam Tim, Shatin (HK)
(74) Representative: Mollekopf, Gerd Willi

(57) **Abstract**

A slider function is provided in a human machine interface (HMI) using buttons. In order to allow a user to increase or decrease a parameter setting, a message is displayed in a display area with at least one visible linear border of a display device, prompting the user to swipe in a direction to increase or decrease the parameter setting. Three or more selectable buttons are displayed in a series parallel to at least one visible linear border in a selection area of a touchscreen device. A selected increase or decrease in the parameter setting is determined based on the order in which at least two adjacent buttons of the three or more selectable buttons are selected by the user. The display device and the touchscreen device can be parts of a single touchscreen device. The single touchscreen device includes the display area and the selection area.

## Description

### FIELD OF THE INVENTION

The teachings herein relate to developing a human machine interface (HMI) for a device or system using a touchscreen. More particularly the teachings herein relate to systems and methods for providing a slider function on the touchscreen using buttons.

### BACKGROUND

Touchscreens or touchscreens in combination with non-touch displays are a common part of the human machine interface (HMI) of many devices and systems today. Touchscreens provide almost an infinite number of ways of both inputting and outputting information to and from these systems, respectively.

Commonly, information is output in a display area of a touchscreen as text or graphics. A response to the information is input in a selection area of the screen mimicking the traditional separation of input and output devices.

Graphical representations of input devices, such as buttons and sliders, are widely used, for example, in the selection area of many touchscreens. However, for smaller systems, including, but not limited to, electric vehicle charger (EV) chargers, smart thermostats, smart thermostatic radiator valves, or induction cooktops, the space available on the touchscreen is limited. As a result, the number of touchscreen input devices that can be used is also limited. In addition, placing too many touchscreen input devices or too many different types of touchscreen input devices in the selection area of a touchscreen of smaller systems can be confusing for the user. Because touchscreens allow a limitless number of different input configurations there is no standard user interface. As a result, for every configuration of input devices displayed on the touchscreen, there is a learning curve. The more touchscreen input devices that are used, however, increases this learning curve, making the systems that use touchscreens more difficult to use.

As a result, there is an unmet need for systems and methods that reduce the number of touchscreen input devices and the number of different types of touchscreen input devices used in the selection area of a touchscreen of a smaller device or system.

### SUMMARY

The invention is defined in the independent claims. Particular embodiments are set out in the dependent claims.

### BRIEF DESCRIPTION OF THE DRAWINGS

The skilled artisan will understand that the drawings, described below, are for illustration purposes only. The drawings are not intended to limit the scope of the present teachings in any way.
- Figure 1: is a block diagram that illustrates a computer system, upon which embodiments of the present teachings may be implemented.
- Figure 2: is an exemplary diagram of a human machine interface (HMI).
- Figure 3: is an exemplary diagram of the HMI of Figure 2 showing the selection area without backlighting.
- Figure 4: is an exemplary diagram showing an HMI that provides a slider function using buttons.
- Figure 5: is an exemplary diagram showing how the HMI of Figure 4 is modified to prompt the user to swipe in the opposite direction.
- Figure 6: is an exemplary diagram showing how the HMI of Figure 4 is modified to allow a user to select one or two options.
- Figure 7: is an exemplary diagram showing how the HMI of Figure 4 is modified to allow a user to confirm a selection.
- Figure 8: is an exemplary flowchart showing a method for providing a slider function using buttons in an HMI.

### GENERAL CONCEPT OF THE INVENTION

A slider function is provided in a human machine interface (HMI) using buttons. In order to allow a user to increase or decrease a parameter setting, a message is displayed in a display area with at least one visible linear border of a display device, prompting the user to swipe in a direction to increase or decrease the parameter setting. Three or more selectable buttons are displayed in a series parallel to at least one visible linear border in a selection area of a touchscreen device. A selected increase or decrease in the parameter setting is determined based on the order in which at least two adjacent buttons of the three or more selectable buttons are selected by the user. The display device and the touchscreen device can be parts of a single touchscreen device. The single touchscreen device includes the display area and the selection area.

Before embodiments of the present teachings are described in detail, one skilled in the art will appreciate that the present teachings are not limited in their application to the details of construction, the arrangements of components, and the arrangement of steps set forth in the following detailed description or illustrated in the drawings. Also, it is to be understood that the phraseology and terminology used herein is for the purpose of description and should not be regarded as limiting.

### DETAILED DESCRIPTION

### COMPUTER-IMPLEMENTED SYSTEM

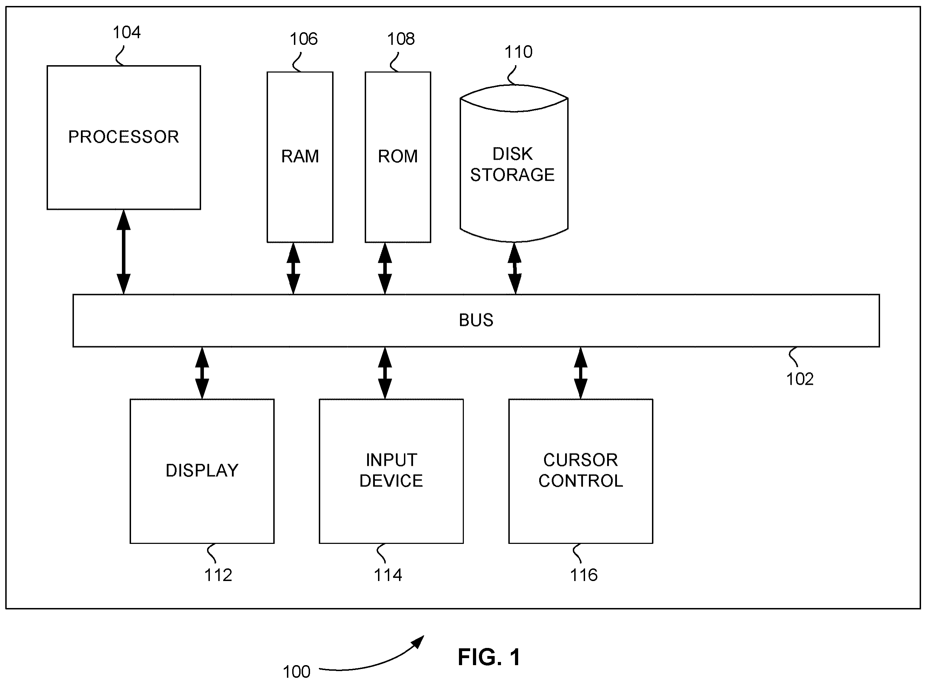

Figure 1 is a block diagram that illustrates a computer system 100, upon which embodiments of the present teachings may be implemented. Computer system 100 includes a bus 102 or other communication mechanism for communicating information, and a processor 104 coupled with bus 102 for processing information. Computer system 100 also includes a memory 106, which can be a random-access memory (RAM) or other dynamic storage device, coupled to bus 102 for storing instructions to be executed by processor 104. Memory 106 also may be used for storing temporary variables or other intermediate information during execution of instructions to be executed by processor 104. Computer system 100 further includes a read only memory (ROM) 108 or other static storage device coupled to bus 102 for storing static information and instructions for processor 104. A storage device 110, such as a magnetic disk or optical disk, is provided and coupled to bus 102 for storing information and instructions.

Computer system 100 may be coupled via bus 102 to a display 112, such as a cathode ray tube (CRT) or liquid crystal display (LCD), for displaying information to a computer user. An input device 114, including alphanumeric and other keys, is coupled to bus 102 for communicating information and command selections to processor 104. Another type of user input device is cursor control 116, such as a mouse, a trackball or cursor direction keys for communicating direction information and command selections to processor 104 and for controlling cursor movement on display 112.

A computer system 100 can perform the present teachings. Consistent with certain implementations of the present teachings, results are provided by computer system 100 in response to processor 104 executing one or more sequences of one or more instructions contained in memory 106. Such instructions may be read into memory 106 from another computer-readable medium, such as storage device 110. Execution of the sequences of instructions contained in memory 106 causes processor 104 to perform the process described herein.

Alternatively, hard-wired circuitry may be used in place of or in combination with software instructions to implement the present teachings. For example, the present teachings may also be implemented with programmable artificial intelligence (AI) chips with only the encoder neural network programmed - to allow for performance and decreased cost. Thus, implementations of the present teachings are not limited to any specific combination of hardware circuitry and software.

The term "computer-readable medium" or "computer program product" as used herein refers to any media that participates in providing instructions to processor 104 for execution. The terms "computer-readable medium" and "computer program product" are used interchangeably throughout this written description. Such a medium may take many forms, including but not limited to, non-volatile media and volatile media. Non-volatile media includes, for example, optical or magnetic disks, such as storage device 110. Volatile media includes dynamic memory, such as memory 106.

Common forms of computer-readable media include, for example, a floppy disk, a flexible disk, hard disk, magnetic tape, or any other magnetic medium, a CD-ROM, digital video disc (DVD), a Blu-ray Disc, any other optical medium, a thumb drive, a memory card, a RAM, PROM, and EPROM, a FLASH-EPROM, any other memory chip or cartridge, or any other tangible medium from which a computer can read.

Various forms of computer readable media may be involved in carrying one or more sequences of one or more instructions to processor 104 for execution. For example, the instructions may initially be carried on the magnetic disk of a remote computer. The remote computer can load the instructions into its dynamic memory and send the instructions over a telephone line using a modem. A modem local to computer system 100 can receive the data on the telephone line and use an infra-red transmitter to convert the data to an infra-red signal. An infra-red detector coupled to bus 102 can receive the data carried in the infra-red signal and place the data on bus 102. Bus 102 carries the data to memory 106, from which processor 104 retrieves and executes the instructions. The instructions received by memory 106 may optionally be stored on storage device 110 either before or after execution by processor 104.

In accordance with an embodiment, instructions configured to be executed by a processor to perform a method are stored on a computer-readable medium. The computer-readable medium can be a device that stores digital information. The computer-readable medium is accessed by a processor suitable for executing instructions configured to be executed.

The following descriptions of various implementations of the present teachings have been presented for purposes of illustration and description. It is not exhaustive and does not limit the present teachings to the precise form disclosed. Modifications and variations are possible in light of the above teachings or may be acquired from practicing of the present teachings. Additionally, the described implementation includes software but the present teachings may be implemented as a combination of hardware and software or in hardware alone. The present teachings may be implemented with both object-oriented and non-object-oriented programming systems.

### SLIDER FUNCTION USING BUTTONS

As described above, touchscreens or touchscreens in combination with non-touch displays are a common part of the human machine interface (HMI) of many devices and systems today. Commonly, information is output in a display area of a touchscreen as text or graphics. A response to the information is input in a selection area of the screen mimicking the traditional separation of input and output devices.

Graphical representations of input devices, such as buttons and sliders, are widely used, for example, in the selection area of many touchscreens. However, for smaller systems, the number of touchscreen input devices that can be used is limited. In addition, placing too many different types of touchscreen input devices increases the learning curve for a user, making the systems that use touchscreens more difficult to use.

As a result, there is an unmet need for systems and methods that reduce the number of touchscreen input devices and the number of different types of touchscreen input devices used in the selection area of a touchscreen of a smaller device or system.

A touchscreen or a touchscreen in combination with a non-touch display may be used for small devices or systems. A touchscreen may include both a display area and a selection area. The number of touchscreen input devices placed in the selection area of the touchscreen is limited by placing three or more of the input devices in a single column or row. The number of different types of touchscreen input devices is reduced by using just a single type of input device. For example, only three or more buttons positioned in a single row or column are used in the selection area of the touchscreen.

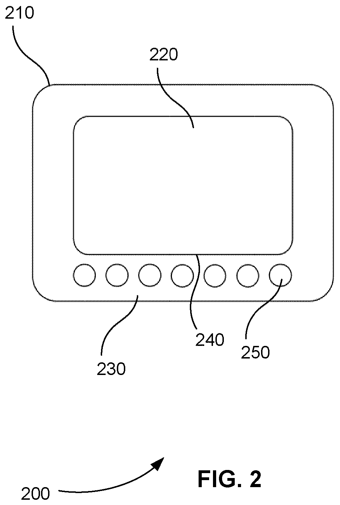

Figure 2 is an exemplary diagram 200 of an HMI. In Figure 2, touchscreen 210 includes display area 220 and selection area 230. Display area 220 and selection area 230 are separated by visible border 240. A plurality of buttons 250 are positioned in a single row in selection area 230. In Figure 2, a plurality of buttons 250 includes a total of seven buttons that can be displayed and used.
Information designed to prompt a response from a user is displayed in display area 220 of touchscreen 210. One or more buttons of plurality of buttons 250 are displayed in selection area 230 of the touchscreen, allowing a user to make a selection in response to the information displayed in display area 220. The one or more buttons are displayed, for example, by turning on their backlighting.

The learning curve required of a user to operate the system is reduced by using buttons in selection area 230 to perform the function of other types of input devices. For example, three or more buttons of plurality of buttons 250 can be used to simulate the function of a slider input device. First, information is displayed in display area 220, telling the user that a setting can be increased or decreased by swiping and displaying the three or more buttons in selection area 230. Then, whether an increase or decrease in a particular parameter setting is being made for the system is determined by detecting the direction of selections between adjacent buttons of the three or more buttons. The amount of the increase or decrease may be determined by the time delay between the selections of the adjacent buttons of the three or more buttons, for example.

Several devices may be used. For example, a touchscreen can be used only for selection area 230 and a non-touch display can be used for display area 220.

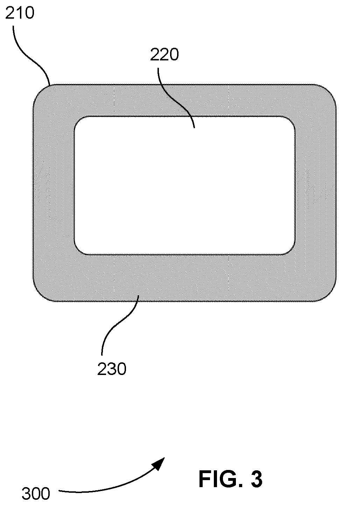

Figure 3 is an exemplary diagram 300 of the HMI of Figure 2 showing the selection area without backlighting. In Figure 3, no backlighting is performed in selection area 230 of touchscreen 210. As a result, the buttons of the selection area 230 are hidden and the entire selection area 230 creates a border around display area 220.

### HMI with simulated slider function

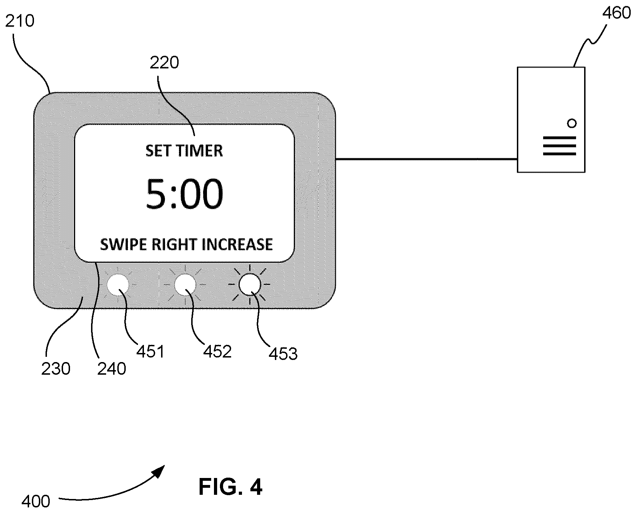

Figure 4 is an exemplary diagram 400 showing an HMI that provides a slider function using buttons. The HMI of Figure 4 includes a display device, a touchscreen device, and one or more processors 460. The display device includes display area 220 with at least one visible linear border 240. The touchscreen device includes selection area 230 positioned adjacent to at least one visible linear border 240.
As shown in Figure 4, the display device and the touchscreen device may be a single touchscreen device 210. Single touchscreen device 210 includes display area 220 and selection area 230. The display device and the touchscreen device may be separate devices.

One or more processors 460 can be, but are not limited to, controllers, computers, microprocessors, computer systems as depicted by Figure 1, or any devices capable of sending and receiving control signals or data and analyzing data.

One or more processors 460 are in communication with the display device and the touchscreen device. As shown in Figure 4, one or more processors 460 are in communication with single touchscreen device 210 that acts as both the display device and the touchscreen device.

In order to allow a user to increase or decrease a parameter setting, one or more processors 460 display three or more selectable buttons 451-453 in selection area 230 of the touchscreen device in a series parallel to at least one visible linear border 240. One or more processors 460 display in display area 220 of the display device a message, prompting the user to swipe in a direction to increase or decrease the parameter setting.

As shown in Figure 4, the exemplary message prompts the user to swipe to the right to increase the parameter setting. The parameter setting is, for example, the time of a timer. Finally, one or more processors 460 determine a selected increase or decrease in the parameter setting based on the order in which at least two adjacent buttons of three or more selectable buttons 451-453 are selected by the user. For example, as shown in Figure 4, if button 451 is selected before button 452 and button 452 is selected before button 453, one or more processors 460 can determine that an increase in the time of the timer is selected.

As shown in Figure 4, one or more processors 460 may create at least one visible linear border 240 by not backlighting selection area 230 on single touchscreen device 210.

As shown in Figure 2, one or more processors 460 may create at least one visible linear border 240 by drawing at least one line on single touchscreen device 210.

Returning to Figure 4, one or more processors 460 may further determine an amount of increase or decrease of the parameter setting by determining a time delay in selections made by the user of at least two adjacent buttons of three or more selectable buttons 451-453.

As shown in Figure 4, three or more selectable buttons 451-453 may be round buttons. Three or more selectable buttons 451-453 may have any shape.

One or more processors 460 may display three or more selectable buttons 451-453 in selection area 430 of the touchscreen by backlighting three or more selectable buttons 451-453.

As shown in Figure 4, one or more processors 460 may vary the amount of backlighting between adjacent buttons of three or more selectable buttons 451-453 to correspond to the direction of the message. As shown, button 452 gets more backlighting than button 451 and button 453 gets more backlighting than button 452 to show that the buttons should be swiped to the right to increase the time of the timer. Alternatively, the backlighting of buttons 451-453 is turned on and off in sequence to show that the buttons should be swiped to the right to increase the time of the timer.

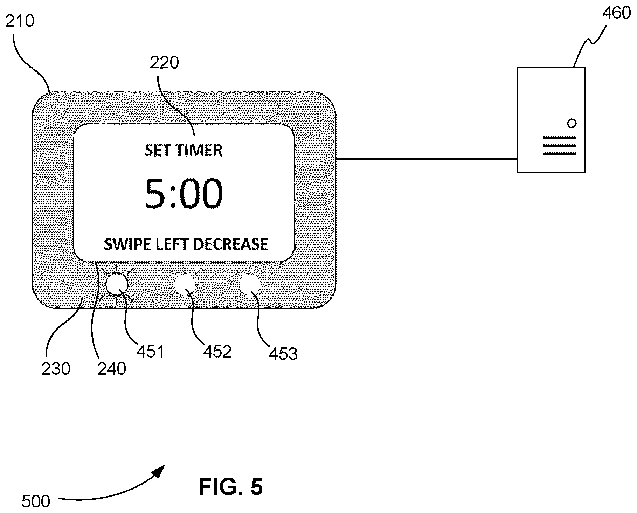

Figure 5 is an exemplary diagram 500 showing how the HMI of Figure 4 is modified to prompt the user to swipe in the opposite direction. In Figure 5, the message displayed in display area 220 of single touchscreen 210 is changed to prompt the user to swipe left to decrease the time of the timer. In addition, the backlighting between adjacent buttons of three or more selectable buttons 451-453 is changed to correspond to the direction of the message. Now button 452 gets more backlighting than button 453 and button 451 gets more backlighting than button 452 to show that the buttons should be swiped to the left to decrease the time of the timer. Alternatively, the backlighting of buttons 451-453 is turned on and off in sequence to show that the buttons should be swiped to the left to decrease the time of the timer.

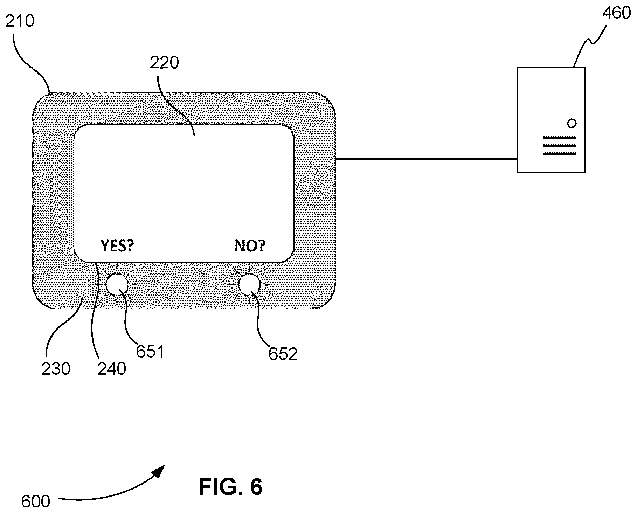

Figure 6 is an exemplary diagram 600 showing how the HMI of Figure 4 is modified to allow a user to select one or two options. In order to allow a user to select one of two options, one or more processors 460 display two selectable buttons 651 and 652 in selection area 230 in a series parallel to at least one visible linear border 240. One or more processors 460 display in display area 220 a message with each option of the two options displayed near a button of the two selectable buttons 651 and 652. As shown in Figure 6, the two options are Yes and No. Finally, one or more processors 460 determine the selected option of the two options from the button selected by the user.

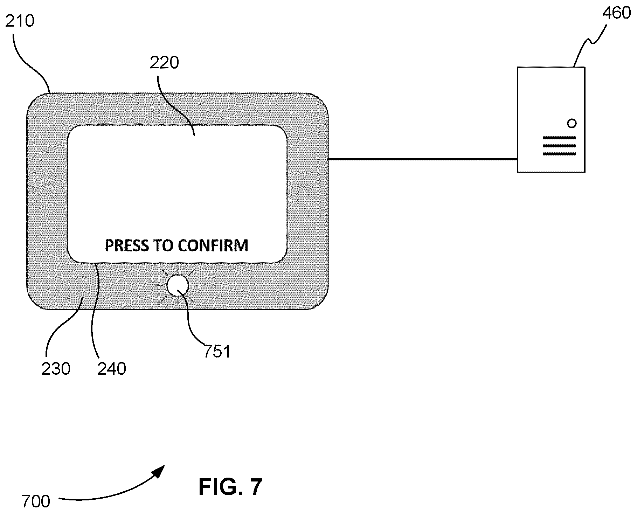

Figure 7 is an exemplary diagram 700 showing how the HMI of Figure 4 is modified to allow a user to confirm a selection. In order to allow a user to confirm a selection, one or more processors 460 display one selectable button 751 in selection area 230. One or more processors 460 display in display area 220 near one selectable button 751 a message, asking the user to confirm the selection. As shown in Figure 7, the message asks the user to "Press To Confirm." Finally, one or more processors 460 determine that the selection is confirmed if one selectable button 751 selected is by the user and determine that the selection is not confirmed if one selectable button 751 is not selected by the user within a predetermined time delay.

### Method for providing a slider function in an HMI

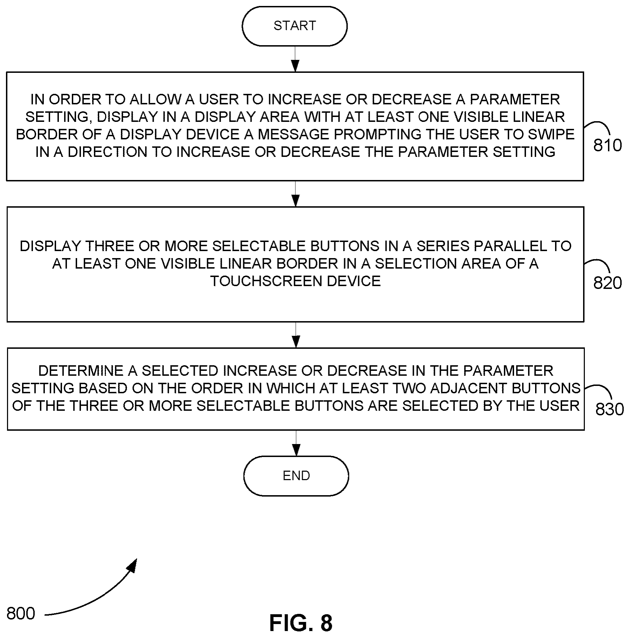

Figure 8 is an exemplary flowchart showing a method 800 for providing a slider function using buttons in an HMI.
In step 810 of method 800, in order to allow a user to increase or decrease a parameter setting, a message is displayed in a display area with at least one visible linear border of a display device, prompting the user to swipe in a direction to increase or decrease the parameter setting.

In step 820, three or more selectable buttons are displayed in a series parallel to at least one visible linear border in a selection area of a touchscreen device.

In step 830, a selected increase or decrease in the parameter setting is determined based on the order in which at least two adjacent buttons of the three or more selectable buttons are selected by the user.

While the present teachings are described in conjunction with various embodiments, it is not intended that the present teachings be limited to such embodiments. On the contrary, the present teachings encompass various alternatives, modifications, and equivalents, as will be appreciated by those of skill in the art.

Further, in describing various embodiments, the specification may have presented a method and/or process as a particular sequence of steps. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the specification should not be construed as limitations on the claims.

## Claims

1. A human machine interface (200, 300, 400, 500, 600, 700), HMI, that provides a slider function using buttons (451, 452, 453), comprising:
a display device that includes a display area (220) with at least one visible linear border (240);
a touchscreen device (210) that includes a selection area (230) positioned adjacent to the at least one visible linear border (240); and
one or more processors (460) in communication with the display device and the touchscreen device (210) and being configured, in order to allow a user to increase or decrease a parameter setting, to display three or more selectable buttons (451, 452, 453) in the selection area (230) of the touchscreen device in a series parallel to at least one visible linear border (240), to display in the display area (220) of the display device a message prompting the user to swipe in a direction to increase or decrease the parameter setting, and to determine a selected increase or decrease in the parameter setting based on an order in which at least two adjacent buttons (451, 452, 453) of the three or more selectable buttons (451, 452, 453) are selected by the user.

2. The HMI of claim 1, wherein the display device and the touchscreen device are a single touchscreen device (210) and the single touchscreen device (210) includes the display area (220) with the at least one visible linear border (240) and the selection area (230) positioned adjacent to the at least one visible linear border (240).

3. The HMI of claim 1 or 2, wherein the one or more processors (460) are configured to create the at least one visible linear border (240) by:
not backlighting the selection area (230) on the single touchscreen device (210), or
drawing at least one line on the single touchscreen device (210).

4. The HMI of claim 1, 2 or 3, wherein the one or more processors (460) are further configured to determine an amount of increase or decrease of the parameter setting by determining a time delay in selections made by the user of at least two adjacent buttons of the three or more selectable buttons (451, 452, 453).

5. The HMI of any of the preceding claims, wherein the three or more selectable buttons (451, 452, 453) comprise round buttons.

6. The HMI of any of the preceding claims, wherein the one or more processors (460) are configured to display the three or more selectable buttons (451, 452, 453) in the selection area (230) of the touchscreen (210) by backlighting the three or more selectable buttons (451, 452, 453).

7. The HMI of claim 6, wherein the one or more processors (460) are configured to vary the amount of backlighting between adjacent buttons of the three or more selectable buttons (451, 452, 453) to correspond to the direction of the message or the one or more processors (460) are configured to turn on and off backlighting between adjacent buttons of the three or more selectable buttons (451, 452, 453) to correspond to the direction of the message.

8. The HMI of any of the preceding claims, wherein the one or more processors (460) are further configured, in order to allow a user to select one of two options, to display two selectable buttons (651, 652) in the selection area (230) of the touchscreen device (210) in a series parallel to at least one visible linear border (240), to display in the display area (220) of the display device a message with each option of the two options displayed near a button of the two selectable buttons (651, 652), and to determine the selected option of the two options from the button selected by the user.

9. The HMI of any of the preceding claims, wherein the one or more processors (460) are further configured, in order to allow a user to confirm a selection, to display one selectable button (751) in the selection area (230) of the touchscreen device (210), to display in the display area (220) of the display device near the one selectable button (751) a message asking the user to confirm the selection, to determine that the selection is confirmed if the one selectable button (751) is selected by the user, and to determine that the selection is not confirmed if the one selectable button (751) is not selected by the user within a predetermined time delay.

10. A method for providing a slider function using buttons in a human machine interface (200, 300, 400, 500, 600, 700), HMI, comprising:
in order to allow a user to increase or decrease a parameter setting, displaying in a display area (220) with at least one visible linear border (240) of a display device a message, prompting the user to swipe in a direction to increase or decrease the parameter setting;
displaying three or more selectable buttons (451, 452, 453) in a series parallel to at least one visible linear border (240) in a selection area (230) of a touchscreen device (210); and
determining a selected increase or decrease in the parameter setting based on an order in which at least two adjacent buttons of the three or more selectable buttons (451, 452, 453) are selected by the user.

11. The method of claim 10, wherein the display device and the touchscreen device are a single touchscreen device (210) and the single touchscreen device includes the display area (220) with the at least one visible linear border (240) and the selection area (230) positioned adjacent to the at least one visible linear border (240).

12. The method of claim 10 or 11, wherein the at least one visible linear border (240) is created by:
not backlighting the selection area (230) on the single touchscreen device (210), or
drawing at least one line on the single touchscreen device (210).

13. The method of any of claims 10 to 12, wherein an amount of increase or decrease of the parameter setting is determined from a time delay in selections made by the user of at least two adjacent buttons of the three or more selectable buttons (451, 452, 453).

14. The method of any of claims 10 to 13,
wherein the three or more selectable buttons (451, 452, 453) comprise round buttons, and/or
wherein the three or more selectable buttons (451, 452, 453) are displayed in the selection area (230) of the touchscreen (210) by backlighting the three or more selectable buttons (451, 452, 453),
wherein preferably the amount of backlighting is varied between adjacent buttons of the three or more selectable buttons (451, 452, 453) to correspond to the direction of the message or the backlighting between adjacent buttons of the three or more selectable buttons (451, 452, 453) is turned on and off to correspond to the direction of the message.

15. The method of any of claims 10 to 14, further comprising:
in order to allow a user to select one of two options, displaying two selectable buttons (651, 652) in the selection area (230) of the touchscreen device (210) in a series parallel to at least one visible linear border (240), displaying in the display area (220) of the display device a message with each option of the two options displayed near a button of the two selectable buttons (651, 652), and determining the selected option of the two options from the button selected by the user, and/or
in order to allow a user to confirm a selection, displaying one selectable button (751) in the selection area (230) of the touchscreen device (210), displays in the display area (220) of the display device near the one selectable button (751) a message asking the user to confirm the selection, determining that the selection is confirmed if the one selectable button (751) is selected by the user, and determining that the selection is not confirmed if the one selectable button (751) is not selected by the user within a predetermined time delay.
